# EUROPEAN PATENT APPLICATION

(11) **EP 2 405 557 A1**
(43) Date of publication of application: **11.01.2012**
(21) Application number: 11169752.0
(22) Date of filing: 14.06.2011
(51) Int. Cl.: H02K 1/27

(54) **Permanent Magnet Rotor**

(30) Priority: 05.07.2010 JP 2010152919
(71) Applicant: Shinano Kenshi Kabushiki Kaisha, Nagano 386-0498 (JP)
(72) Inventor: Uni, Masahiko, Ueda-shi, Nagano 386-0498 (JP); Kodama, Yuji, Ueda-shi, Nagano 386-0498 (JP)
(74) Representative: Calderbank, Thomas Roger

(57) **Abstract**

The permanent magnet rotor (1) is capable of making tolerance of attaching a magnet cover (5) great, preventing the magnet cover (5) from being broken, etc. The permanent magnet rotor (1) of an inner rotor-type motor comprises: a rotor yoke (3); a plurality of permanent magnets (4) being arranged on an outer circumferential face of the rotor yoke (3), the permanent magnets (4) constituting a plurality of segments; and a ring-shaped magnet cover (5) covering outer faces of the permanent magnets (4), the magnet cover (5) being composed of a nonmagnetic material. An inner diameter of the magnet cover (5) before covering the outer faces of the permanent magnets (4) is smaller than an outer diameter of the circularly-arranged permanent magnets (4). At least one stretchable section (5a}, which is capable of being stretched in the circumferential direction, is formed in the magnet cover (5).

## Description

The present invention relates to a permanent magnet rotor of a motor.

Each of motors has a rotor and a stator. The stator has a stator core, and motor coils are wound on teeth sections, which are inwardly extended from the stator core, and insulators, which cover the stator core.

For example, in an inner rotor-type brushless motor, a plurality of permanent magnets, each of which constitutes a segment of the rotor, are adhered on an outer circumferential face of a rotor yoke of the motor by an adhesive, or the rotor yoke and the permanent magnets are integrally molded with resin,

Outer faces of the permanent magnets attached to the rotor yoke are covered with a ring-shaped magnet cover so as to fix the permanent magnets and prevent scatter of the magnets. For example, the ring-shaped magnet cover, which is composed of a nonmagnetic material and whose diameter is greater than the circularly-arranged permanent magnets, is attached to cover the magnets, and then parts of the magnet cover which correspond to groove sections formed between the adjacent magnets are plastic-deformed radially inward to fit in the groove sections so as to tightly fit the magnet cover, on the outer faces of the magnets (see Japanese Laid-open Patent Publication No. P6-284650A).

In another motor, a ring-shaped magnet cover is composed of a nonmagnetic material and has an inner face on which a plurality of linear projections are formed. The linear projections restrain relative movement of the magnets in the circumferential direction. A width of one axial end of each linear projection is wider than that of the other axial end thereof like a wedge. Therefore, circumferential positions of magnets can be fixed by function of the wedge-shaped projections (see Japanese Laid-open Patent Publication No. P2009-171736A).

In case of fixing the magnets on the rotor yoke by an adhesive, adhesive strength will be widely varied and the adhesive is easily deteriorated by humidity and chemicals. Generally, adhesive strength is reduced at temperature of 100□ or higher. Therefore, it is difficult to maintain anchorage strength.

In case of integrally molding the rotor yoke and the permanent magnets with resin, the resin is expanded or a property of the resin is varied by temperature variation. Further, if the rotor contacts certain chemicals or fats, swelling or chemical attack will occur. So, it is difficult to secure reliability of the rotor.

Especially, in case of an in-vehicle motor, high performance capable of withstanding temperature variation from -40 to +15011 is required.

In the conventional technology disclosed in Japanese Laid-open Patent Publication No. P6-284650A, the ring-shaped magnet cover is plastic-deformed, so gaps will be easily formed between the magnet cover and the magnets due to expansion of the material of the magnet cover and spring back of the deformed parts.

By strongly pressing the magnet cover, toward the groove sections, to plastic-deform, the magnets will be broken or cracked.

In the conventional technology disclosed in Japanese Laid-open Patent Publication No. P2009-171736A, the magnets are positioned and fixed by the wedge-shaped linear projections, in each of which the width of the one axial end is wider than that of the other axial end. However, if thermal expansion rates of structural elements of the rotor are different, there is a possibility that the wide axial ends of the linear projections cannot expand or contract in the circumferential direction and inner stress concentrates on the magnets or the magnet cover. So, the magnets or the magnet cover will be broken by concentration of the inner stress.

Accordingly, it is a preferred aim to provide a permanent magnet rotor so as to solve the above described problems of the conventional technology.

Namely, the permanent magnet rotor is capable of making tolerance of attaching a magnet cover great, applying no stress to structural elements of the rotor, preventing the magnet cover from being broken under an environment where thermal expansion and thermal contraction are repeated in response to temperature variation, and preventing scatter of magnets.

The present invention has following structures.

Namely, the permanent magnet rotor of an inner rotor-type motor comprises:
a rotor yoke;
a plurality of permanent magnets being arranged on an outer circumferential face of the rotor yoke, the permanent magnets constituting a plurality of segments; and
a ring-shaped magnet cover covering outer faces of the permanent magnets, the magnet cover being composed of a nonmagnetic material,
an inner diameter of the magnet cover before covering the outer faces of the permanent magnets is smaller than an outer diameter of the circularly-arranged permanent magnets, and
at least one stretchable section, which is capable of being stretched in the circumferential direction, is formed in the magnet cover.

In the permanent magnet rotor, the magnet cover is stretchable or has a spring function. Therefore, the inner diameter of the magnet cover is smaller than the outer diameter of the circularly-arranged permanent magnets, but the magnet cover can be attached without applying excessive force, and the permanent magnets can be fixed by being sandwiched between the inner face of the magnet cover and the outer face of the rotor yoke.

According to the stretchable section is formed, even if the inner diameter of the magnet cover and the outer diameter of the circularly arrange permanent magnets are excessively varied by thermal expansion, the stretchable section of the magnet cover can suitably extended and contracted, so that applying excessive stress to the permanent magnets can be prevented. Further, damaging and loosening structural elements of the rotor can be prevented.

Preferably, the stretchable section is located at a position corresponding to a space between the adjacent permanent magnets, and
the stretchable section is bent to convex radially inward or outward.

With this structure, even if high tensile force is applied to the magnet cover because of different thermal expansion rates of the structural elements of the rotor, a bending angle of the stretchable section is made large, so that the magnet cover can extend and inner stress applied to the permanent magnets can be reduced. On the other hand, in case that the structural elements of the rotor are loosened because of different thermal expansion rates, the bending angle of the stretchable section is made small, so that the inner diameter of the magnet cover is reduced and reducing force for holding the structural elements can be prevented.

Preferably, at least a pair of the stretchable sections are axisymmetrically arranged.

With this structure, the permanent magnets are correctly positioned, in the circumferential direction, between the magnet cover and the rotor yoke, by elasticity of the stretchable section. Therefore, in a motor whose load and centrifugal force are small, the permanent magnets can be attached and fixed without using an adhesive.

In the present invention, tolerance of attaching the magnet cover can be made great, no excessive stress is applied to the structural elements of the rotor, damaging the magnet cover under an environment where thermal expansion and thermal contraction are repeated in response to temperature variation can be prevented, and scatter of the permanent magnets can be prevented.

Embodiments of the present invention will now be described by way of examples and with reference to the accompanying drawings, in which:
Fig. 1 is a front view of an embodiment of the permanent magnet rotor relating to the present invention;
Fig. 2 is a partial enlarged perspective view of the permanent magnet rotor;
Fig. 3 is a perspective view of the permanent magnet rotor, which shows an assembling process of the rotor;
Fig. 4 is a perspective view of the permanent magnet rotor, which shows the assembling process of the rotor;
Fig. 5 is a perspective view of the permanent magnet rotor, which shows the assembling process of the rotor;
Fig. 6 is a front view of another permanent magnet rotor;
Fig. 7 is a perspective view of another permanent magnet; and
Fig. 8 is a partial enlarged perspective view of another permanent magnet rotor.

Preferred embodiments of the present invention will now be described in detail with reference to the accompanying drawings. In the following embodiments, permanent t magnet rotors of an inner rotor-type DC brushless motor incorporated in a vehicle will be explained.

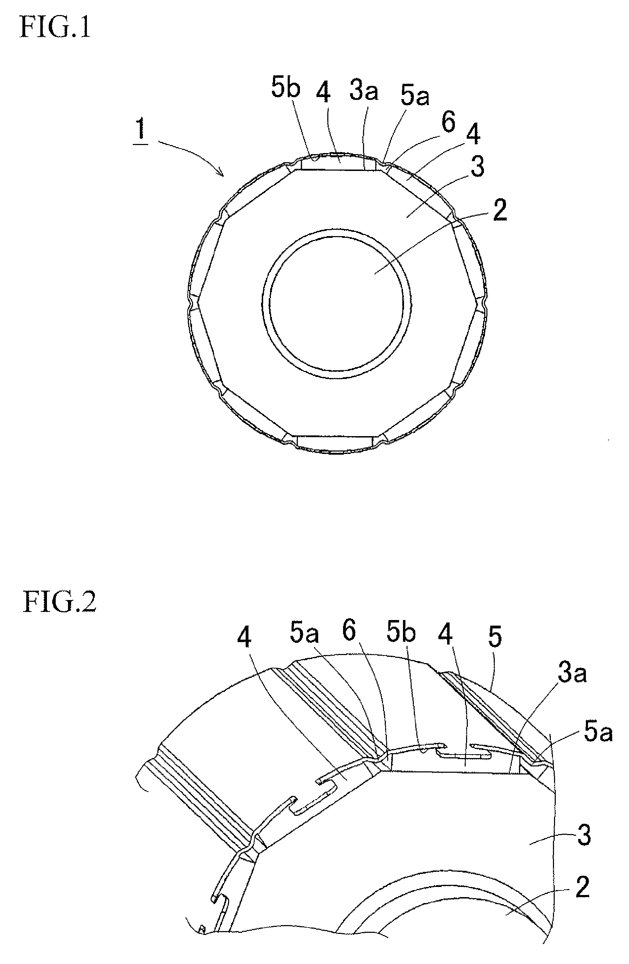

Firstly, an outline of the inner rotor-type DC brushless motor will be explained with reference to Figs. 1 and 2.

A permanent magnet rotor 1 is constituted by a shaft 2 and a rotor yoke 3, which is composed of a magnetic material and integrated with the shaft 2. The rotor yoke 3 has a polygonal section, and planar faces 3a constitute an outer circumferential face of the rotor yoke 3. Permanent magnets 4, each of which constitutes a segment, is provided on each of the planar faces 3a. Outer faces of the permanent magnets 4 are covered with a ring-shaped magnet cover 5, so that the permanent magnets 4 can be held and fixed. The permanent magnets 4 are securely fixed on the planar faces 3a of the rotor yoke 3 by not only their magnetic attractive force but also an adhesive. Further, the magnet cover 5 prevents scatter of the permanent magnets 4 provided on the outer circumferential face (planar faces 3a) of the rotor yoke 3.

A ring-shaped stator core (not shown) encompasses the permanent magnet rotor 1, and teeth sections (magnetic pole sections) are projected radially inward from the stator core and faced each other. The stator core is covered with insulators (not shown), and motor coils (not shown) are wound on the teeth sections and the insulators.

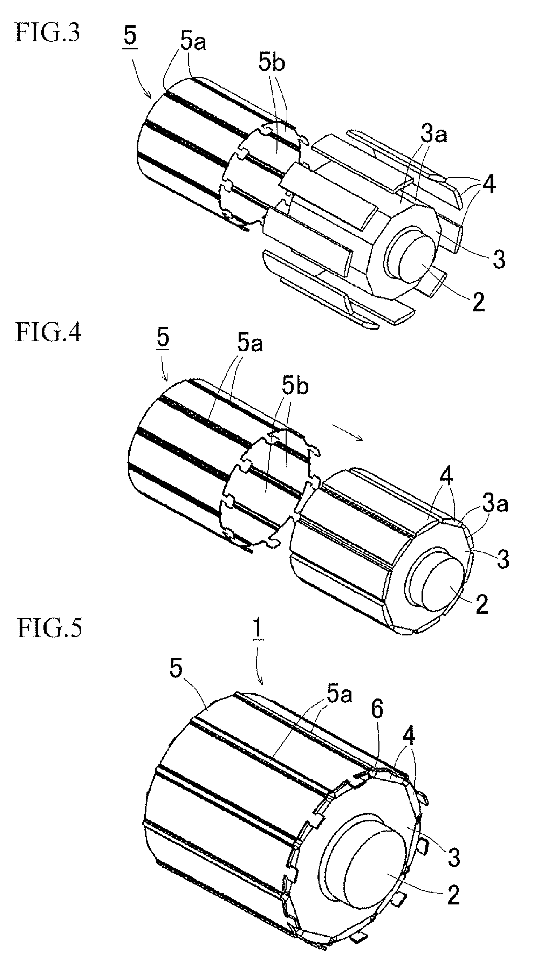

Next, the structure of the permanent magnet rotor I will be explained with reference to Figs. 3-5.

In a state shown in Fig. 3 where the magnet cover 5 does not cover the outer faces of the permanent magnets 4, an inner diameter of the magnet cover 5 is smaller than an outer diameter of the circularly-arranged permanent magnets 4. The magnet cover 5 includes at least one stretchable section 5a, which is located in a space 6 between the adjacent permanent magnets 4 and can be stretched in the circumferential direction of the magnet cover 5. In the present embodiment, a plurality of the stretchable sections 5a are respectively located in the spaces 6.

As described above, the inner diameter of the magnet cover 5 is smaller than the outer diameter of the circularly-arranged permanent magnets 4. By fitting the rotor yoke 3, in which the permanent magnets 4 are adhered on the planar faces 3a, into the magnet cover 5 as shown in Fig. 4, the permanent magnets 4 can be held and fixed by being sandwiched between an inner face sub of the magnet cover 5 and the outer circumferential face (the planar faces 3a} of the rotor yoke 3 as shown in Fig. 5. The stretchable sections 5a are respectively located in the spaces 6, each of which is formed between the adjacent permanent magnets 4. Therefore, even if the magnet cover 5 is thermally expanded or contracted, the stretchable sections 5a absorb the expansion or contraction, so that applying excessive stress to the magnet cover 5 and the permanent magnets 4 can be prevented and damaging the structural elements of the permanent magnet rotor 1 can be prevented.

Each of the stretchable sections 5a is bent to convex radially inward, in each of the spaces 6 formed between the adjacent permanent magnets 4, like a rib.

With this structure, even if great extensive force is applied to the magnet cover 5 by different thermal expansion rates of the structural elements of the permanent magnet rotor 1, bending angles of the stretchable sections 5a are made large, so that the magnet cover 5 can extend and inner stress applied to the magnet cover 5 and the permanent magnets 4 can be reduced. On the other hand, the structural elements of the permanent magnet rotor 1 are loosened by different thermal expansion rates, the bending angles of the stretchable sections 5a are made small, so that the magnet cover 5 can contract and inner stress applied to the permanent magnets 4 can be reduced.

Preferably, at least one pair of the stretchable sections 5a are axisymmetrically arranged. In the present embodiment, five pairs of the stretchable sections Sa are axisymmetrically arranged. With this structure, the permanent magnets 4 are sandwiched between the inner face 5b of the magnet cover 5 and the planar faces 3a of the rotor yoke 3 and correctly positioned, in the circumferential direction, by elasticity of the stretchable sections 5a. Therefore, in case that a load and centrifugal force are small, the permanent magnets 4 can be held and fixed without using an adhesive.

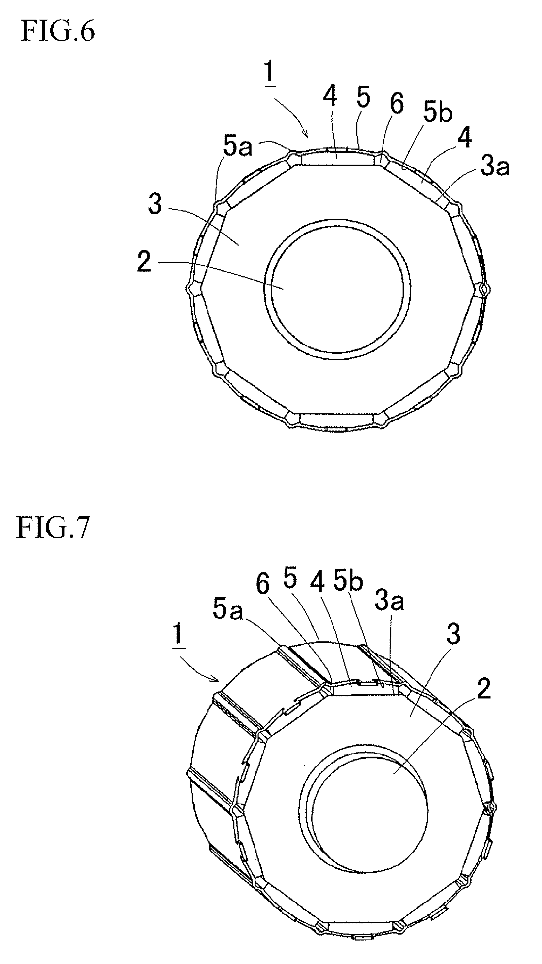

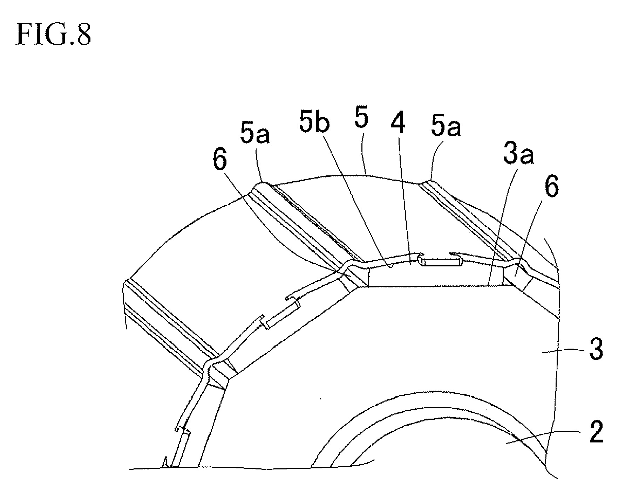

Next, another magnet cover 5 will be explained with reference to Figs. 6-8.

In this embodiment, each of the stretchable sections 5a of the magnet cover 5 is located at a position corresponding to the space 6 formed between the adjacent permanent magnets 4 and is bent to convex radially outward like a rib. A projection length of the stretchable sections 5a, from the outer circumferential face of the permanent magnet rotor 1, is designed so as not to interfere with the teeth sections of the stator core (not shown).

The inner diameter of the magnet cover 5 is smaller than the outer diameter of the circularly-arranged permanent magnets 4 in the state where the magnet cover 5 does not cover the outer faces of the permanent magnets 4. By press-fitting the rotor yoke 3, on which the permanent magnets 4 are held by magnetic attractive force, into the magnet cover 5 in the axial direction, the permanent magnets 4 can be held and fixed by being sandwiched between the inner face 5b of the magnet cover 5 and the outer circumferential face (the planar faces 3a) of the rotor yoke 3 as well as the former embodiment.

Preferably, the magnet cover 5 is composed of a nonmagnetic metal, e.g., stainless steel of SUS 304. The shape of the rib-shaped stretchable section 5a is not limited. Preferably, at least one pair of the stretchable sections 5a are arranged to face each other, so the magnet cover 5 has elasticity. With this structure, the inner diameter of the magnet cover 5 is smaller than the outer diameter of the circularly-arranged permanent magnets 4, but pressing force for press-fitting the rotor yoke 3 into the motor cover 5 can be suitably restrained, so that damaging the structural elements of the permanent magnet rotor 1 can be prevented and work efficiency of assembling the permanent magnet rotor 1 can be improved.

Further, a workload of severely managing tolerances of the structural elements for press-fitting can be reduced. In case that a load and centrifugal force are small, the permanent magnets 4 can be held and fixed without using an adhesive.

In each of the above described embodiments, the permanent magnet rotor of the inner rotor-type DC brushless motor has been explained, but the present invention is not limited to the above described embodiments. The permanent magnet rotor can be applied to motors for other use.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present invention has been described in detail, it should be understood that the various changes, substitutions, and alternations could be made hereto without departing from the spirit and scope of the invention.

## Claims

1. A permanent magnet rotor ( 1 ) of an inner rotor-type motor, comprising:
a rotor yoke (3);
a plurality of permanent magnets (4) being arranged on an outer circumferential face of the rotor yoke (3), the permanent magnets (4) constituting a plurality of segments; and
a ring-shaped magnet cover (5) covering outer faces of the permanent magnets (4), the magnet cover (5) being composed of a nonmagnetic material,
the permanent magnet rotor { 1 being **characterized in,**
**that** an inner diameter of the magnet cover (5) before covering the outer faces of the permanent magnets (4) is smaller than an outer diameter of the circularly-arranged permanent magnets (4), and
**that** at least one stretchable section (5a), which is capable of being stretched in the circumferential direction, is formed in the magnet cover (5).

2. The permanent magnet rotor (1) according to claim l,
wherein the stretchable section (5a) is located at a position corresponding to a space (6) between the adjacent permanent magnets (4), and
the stretchable section (5a) is bent to convex radially inward or outward.

3. The permanent magnet rotor (1) according to claim 1 or 2,
wherein at least a pair of the stretchable sections (5a) are axisymmetrically arranged.
